# FASCICULE DE BREVET EUROPEEN

(11) **EP 0 665 615 B1**
(45) Date de publication et mention de la délivrance du brevet: **06.08.1997**
(21) Numéro de dépôt: 95400147.5
(22) Date de dépôt: 24.01.1995
(51) Int. Cl.: H01S 3/06

(54) **Amplificateur optique à fibre optique en verre fluoré dopé et procédé de fabrication de cet amplificateur**
Optischer Verstärker aus Fluoridglasfasern und Verfahren zu seiner Herstellung
Fluoride glass optical amplifier and method for its manufacture

(30) Priorité: 26.01.1994 FR 9400837
(43) Date de publication de la demande: 02.08.1995
(73) Titulaire: FRANCE TELECOM, 75015 Paris (FR)
(72) Inventeur: Semenkoff, Mathilde, F-22700 Perros Guirec (FR); Ronarc'h, Daniel, F-22300 Lannion (FR); Guibert, Marcel, F-22300 Lannion (FR)
(74) Mandataire: Dubois-Chabert, Guy

(56) Documents cités:
- EP-A- 0 463 771
- WO-A-93/09581
- IEEE PHOTONICS TECHNOLOGY LETTERS, vol.5, no.5, Mai 1993, NEW YORK US pages 540 - 543, XP000368354 H.IBRAHIM ET AL. 'Comparison between Erbium-doped fluoride and silica fiber amplifiers in an AM-CATV transmission System'
- ELECTRONICS LETTERS., vol.30, no.17, 18 Août 1994, ENAGE GB pages 1411 - 1413, XP000476033 M.SEMENKOFF ET AL. 'High power, high gain optical fibre amplifier for multiwavelength transmission systems'

## Description

La présente invention concerne un amplificateur optique à fibre en verre fluoré dopé selon le préambule de la revendication 1 (voir EP-A-0 637 109) et un procédé de fabrication de cet amplificateur.

Elle trouve notamment des applications dans le domaine des télécommunications par fibres optiques.

Le multiplexage en longueur d'onde est une technique prometteuse pour augmenter la capacité de transmission d'une fibre optique, sans être limité, en portée, par la dispersion chromatique de la fibre, ou pour donner de la flexibilité à un réseau de transmission ou de distribution.

L'amplificateur optique à fibre est devenu un composant-clé des télécommunications optiques et l'utilisation d'un multiplex de longueurs d'onde demande à l'amplificateur optique des performances spécifiques.

Celui-ci doit amplifier les diverses longueurs d'onde du multiplex avec le même gain tout en affectant ces longueurs d'onde d'un bruit identique.

Les amplificateurs à fibre de silice dopée à l'erbium présentent un gain spectral qui n'est pas plat et la transmission d'un multiplex de longueurs d'onde à travers un amplificateur à fibre de silice dopée à l'erbium ne peut se faire que si les longueurs d'onde se situent dans une partie plate du spectre de gain de cet amplificateur, ce qui ne représente qu'une partie de la bande d'amplification disponible d'un tel amplificateur.

Diverses techniques ont été proposées pour égaliser le spectre de gain de ces amplificateurs optiques à fibre de silice dopée à l'erbium, notamment :
- utilisation d'un filtre optique placé au milieu de la fibre amplificatrice,
- utilisation d'une boucle-laser à fibre,
- utilisation d'une fibre non totalement pompée.

Ces techniques permettent effectivement d'égaliser le spectre de gain de ces amplificateurs mais elles abaissent ce gain.

Il a été établi, il y a quelques années, qu'en dopant avec de l'erbium le coeur d'une fibre optique à base de verre fluoré tel qu'un verre de fluorozirconate (comme par exemple le ZBLAN), le spectre de gain d'un amplificateur utilisant ce type de fibre était naturellement plat, c'est-à-dire que le gain, en fonction de la longueur d'onde, était quasiment constant de façon naturelle, pour des longueurs d'onde voisines de 1,5 µm, ce qui fait d'un tel amplificateur un candidat pour la transmission multi-longueurs d'onde.

Les expériences de transmission multi-longueurs d'onde avec un amplificateur à fibre en verre fluoré dopé à l'erbium montrent cependant une décroissance du gain dans la partie du spectre optique correspondant aux plus faibles longueurs d'onde, ce qui limite la bande passante de l'amplificateur.

Au centre du spectre de gain, une dépression d'environ 1,5 dB est également observée, ce qui limite les performances d'une « cascade » d'amplificateurs à fibre en verre fluoré dopé à l'erbium.

Une égalisation du spectre de gain des amplificateurs à base de fibres fluorées dopées à l'erbium est donc nécessaire.

La présente invention a pour but de résoudre ce problème d'égalisation.

L'invention vise ainsi à égaliser le spectre de gain d'un amplificateur à fibre optique en verre fluoré dopé à l'erbium.

L'invention permet de rendre le gain d'un tel amplificateur plat à moins de 1 dB dans la gamme de longueurs d'onde allant de 1533 à 1560 nm, tout en conservant le potentiel de gain de cet amplificateur, c'est-à-dire sans abaisser ce gain.

Pour ce faire, on prévoit, de part et d'autre de la fibre optique en verre fluoré dopé à l'erbium que comporte un tel amplificateur, deux fibres optiques en silice qui sont couplées à cette fibre en verre fluoré dopé et dont l'une au moins est également dopée à l'erbium.

De façon précise, la présente invention a pour objet un amplificateur optique à fibre, comprenant :
- une fibre optique monomode centrale en verre fluoré dopé à l'erbium, et
- des première et deuxième fibres optiques monomodes en silice qui sont respectivement placées de part et d'autre de cette fibre optique centrale, qui ont le même diamètre de mode optique que celle-ci et qui lui sont optiquement couplées, de sorte que cette fibre optique centrale est capable d'amplifier un signal lumineux qui lui parvient par l'intermédiaire de la première fibre optique, lorsque la fibre optique centrale reçoit un rayonnement de pompage optique par l'intermédiaire de l'une au moins des première et deuxième fibres optiques,
cet amplificateur étant caractérisé en ce que l'une au moins de ces première et deuxième fibres optiques est dopée à l'erbium.

Selon un premier mode de réalisation particulier de l'amplificateur optique objet de l'invention, la première fibre optique est dopée à l'erbium.

Selon un deuxième mode de réalisation particulier, la deuxième fibre optique est dopée à l'erbium.

Selon un troisième mode de réalisation particulier, les première et deuxième fibres optiques sont dopées à l'erbium.

Le verre fluoré peut être un verre de fluorozirconate, tel que celui du type ZBLA ou ZBLAN.

On peut également choisir tout verre fluoré à partir duquel on peut élaborer une fibre optique monomode.

La présente invention concerne également un procédé de fabrication de l'amplificateur optique qui fait également l'objet de l'invention, caractérisé en ce qu'on choisit la longueur de la fibre optique centrale et la longueur de chaque fibre optique de silice dopée à l'erbium et en ce qu'on couple ensuite optiquement la fibre optique centrale aux première et deuxième fibres optiques, le choix des longueurs de ces fibres permettant d'obtenir une forme déterminée pour la courbe de gain de l'amplificateur.

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un amplificateur optique connu, et
- la figure 2 est une vue schématique d'un mode de réalisation particulier de l'amplificateur optique objet de l'invention.

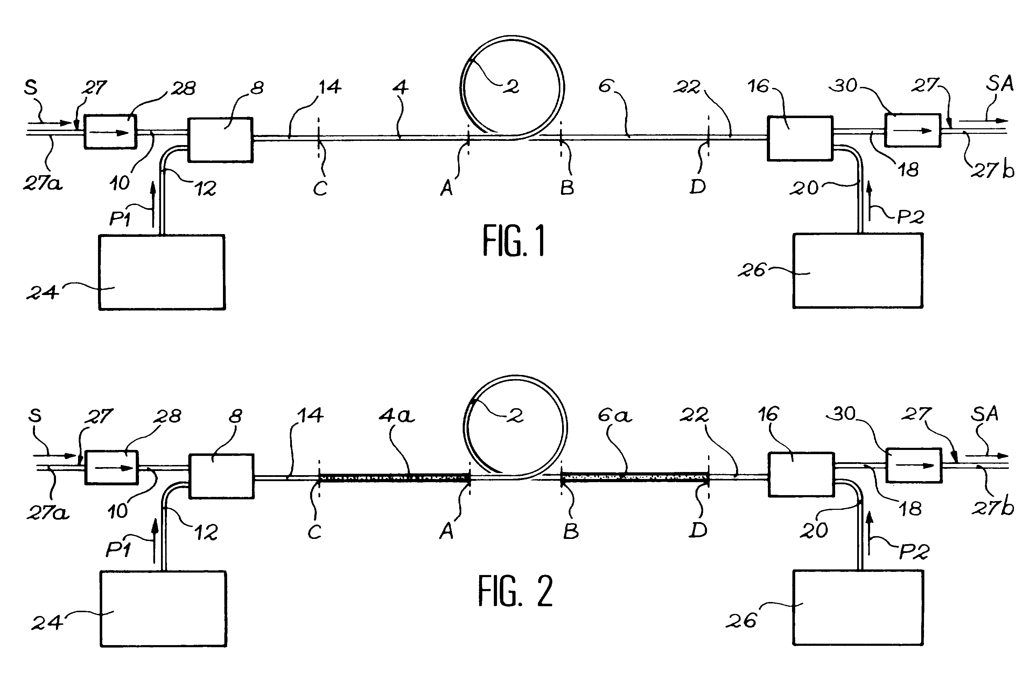

L'amplificateur optique connu, qui est schématiquement représenté sur la figure 1, comprend :
- une fibre optique monomode 2, en verre de fluorozirconate dopé à l'erbium, et
- une première fibre optique monomode en silice non dopée 4 et une deuxième fibre optique monomode en silice non dopée 6 qui sont respectivement placées de part et d'autre de la fibre 2, ont le même diamètre de mode optique que cette fibre 2 et lui sont optiquement couplées.

Les extrémités de la fibre 2 ainsi que l'extrémité de la fibre 4 et l'extrémité de la fibre 6, qui sont destinées à être couplées à cette fibre 2, sont polies en biais, entre 7° et 12°.

Une épissure par collage, référencée A, est réalisée entre les extrémités associées des fibres 4 et 2.

De la même façon, une épissure par collage, référencée B, est réalisée entre les extrémités associées des fibres 2 et 6.

On obtient ainsi un couplage entre les fibres 4 et 2 et un couplage entre les fibres 2 et 6.

L'amplificateur de la figure 1 comprend également :
- un premier multiplexeur 8 de type « 2 vers 1 » muni, d'un côté, de deux fibres optiques monomodes standards en silice 10 et 12 et, de l'autre côté, d'une autre fibre optique monomode standard en silice 14, et
- un deuxième multiplexeur 16 de type « 2 vers 1 » muni, d'un côté, de deux fibres optiques monomodes standards en silice 18 et 20 et, de l'autre côté, d'une autre fibre optique monomode standard en silice 22.

Les fibres 10, 12, 14, 18, 20 et 22 sont par exemple de type G652 (iTU-T).

Les fibres 14 et 22 sont respectivement couplées optiquement aux extrémités libres des fibres 4 et 6 par soudure par fusion-diffusion.

La soudure entre les fibres 4 et 14 porte la référence C et la soudure entre les fibres 6 et 22 porte la référence D sur la figure 1.

L'extrémité libre de la fibre 12 est optiquement couplée à un premier laser de pompage optique 24.

L'extrémité libre de la fibre 20 est optiquement couplée à un deuxième laser de pompage optique 26.

Les lasers 24 et 26 émettent respectivement des rayonnements de pompage optique P1 et P2 qui ont tous deux une longueur d'onde de 1,48 µm dans l'exemple décrit.

L'amplificateur optique représenté sur la figure 1 est inséré dans une ligne optique constituée par une fibre optique 27 en silice standard dans laquelle se propage un signal optique S.

Cette fibre 16 est interrompue pour l'insertion de l'amplificateur optique.

Une partie 27a de la fibre 27 est optiquement couplée à la fibre 10 par l'intermédiaire d'un premier isolateur optique 28 autorisant seulement le passage de lumière de la partie 27a à la fibre 10.

L'autre partie 27b de la fibre 27 est optiquement couplée à la fibre 18 par l'intermédiaire d'un deuxième isolateur optique 30 autorisant seulement le passage de lumière de la fibre 18 vers cette partie 27b.

Le rayonnement P1 parvient à la fibre 2 par l'intermédiaire de la fibre 12, du multiplexeur 8 et des fibres 14 et 4.

Le rayonnement P2 parvient à la fibre 2 par l'intermédiaire de la fibre 20, du multiplexeur 16 et des fibres 22 et 6.

Le milieu amplificateur de la fibre 2 est ainsi pompé optiquement par les rayonnements P1 et P2.

Le signal optique S traverse successivement l'isolateur 28, la fibre 10, le multiplexeur 8, les fibres 14 et 4 et ce signal S est amplifié dans la fibre 2.

Le signal optique amplifié SA traverse successivement les fibres 6 et 22, le multiplexeur 16 et sort de l'amplificateur par la fibre 18 pour se propager dans la partie 27b de la fibre 27 après avoir traversé l'isolateur 30.

L'amplificateur optique conforme à l'invention, qui est schématiquement représenté sur la figure 2, est identique à l'amplificateur de la figure 1 excepté que l'une au moins des fibres 4 et 6 est remplacée par une fibre optique monomode de silice dopée à l'erbium, ayant les mêmes caractéristiques opto-géométriques que la fibre qu'elle remplace.

Dans l'exemple représenté sur la figure 2, la fibre 4 a été remplacée par une fibre monomode en silice dopée à l'erbium 4a, ayant les mêmes caractéristiques opto-géométriques que la fibre 4.

La fibre 6 a également été remplacée par une fibre monomode en silice dopé à l'erbium 6a, ayant les mêmes caractéristiques opto-géométriques que la fibre 6.

Cependant, on obtiendrait également un amplificateur optique conforme à l'invention en remplaçant seulement la fibre 4 par la fibre 4a, sans remplacer la fibre 6, ou en remplaçant seulement cette fibre 6 par la fibre 6a, sans remplacer la fibre 4.

On rappelle que les caractéristiques opto-géométriques d'une fibre optique sont constituées par le diamètre du coeur de cette fibre et par la différence d'indice optique entre le coeur et la gaine optique de cette fibre.

On rappelle également que le diamètre de mode optique d'une fibre optique se calcule, pour une longueur d'onde donnée, en utilisant les caractéristiques opto-géométriques de cette fibre.

Dans un amplificateur optique conforme à l'invention non représenté, le laser de pompage 26 est supprimé et la fibre optique 20 transmet alors un rayonnement de pompage résiduel correspondant au laser 24.

Dans un autre amplificateur optique conforme à l'invention non représenté, c'est au contraire le laser de pompage 24 qui est supprimé (on réalise alors un pompage contra-directionnel) et le rayonnement de pompage résiduel (correspondant dans ce cas au laser 26) se propage alors dans la fibre optique 12.

Dans ces deux amplificateurs optiques conformes à l'invention non représentés, seule la fibre 4 peut être remplacée par la fibre correspondante 4a ou seule la fibre 6 peut être remplacée par la fibre correspondante 6a ou encore les fibres 4 et 6 peuvent être respectivement remplacées par les fibres 4a et 6a.

On précise que la forme exacte du spectre de gain (ou courbe de gain), qui est la courbe des variations du gain de l'amplificateur en fonction de la longueur d'onde, dépend de la longueur de la fibre ou des fibres de silice dopée à l'erbium utilisées et de la position de cette fibre ou ces fibres par rapport au(x) laser(s) de pompage de l'amplificateur dans lequel elle(s) se trouve(nt).

Comme on l'a vu plus haut, on peut par exemple utiliser une seule fibre de silice dopée à l'erbium, placée d'un côté de la fibre de fluorozirconate dopée : soit du côté du laser de pompage soit du côté de la sortie de l'amplificateur optique (en supposant qu'il n'y ait qu'un laser de pompage et que celui-ci soit placé du côté de l'entrée de l'amplificateur).

Lorsqu'on utilise deux fibres monomodes de silice dopée à l'erbium, respectivement placées de part et d'autre de la fibre monomode de fluorozirconate dopé (avec un ou deux lasers de pompage), ces deux fibres monomodes de silice dopée à l'erbium n'ont pas nécessairement la même longueur.

On précise que lorsqu'on utilise deux lasers de pompage, pour un pompage co-directionnel et un pompage contra-directionnel,
- lorsqu'il n'y a qu'une fibre de silice dopée, le laser situé du côté de celle-ci peut être un laser émettant à 0,98 µm, et
- lorsqu'il y a deux fibres de silice dopée, l'un des deux lasers peut être un laser émettant à 0,98 µm.

La forme du spectre de gain d'un amplificateur optique conforme à l'invention dépend non seulement de la longueur de la fibre ou des fibres en silice dopée à l'erbium mais encore de la longueur de la fibre en verre fluoré dopé à l'erbium, longueurs qui ont été choisies lors de la fabrication de cet amplificateur optique.

Ainsi, la forme du spectre de gain peut être ajustée en choisissant ces longueurs, en fabricant l'amplificateur et en recommençant ce choix et cette fabrication jusqu'à l'obtention d'un spectre de gain satisfaisant.

Il résulte de tout ceci une grande souplesse de l'ingéniérie du spectre de gain de l'amplificateur optique objet de l'invention, amplificateur que l'on pourrait appeler « amplificateur hybride ».

## Revendications

1. Amplificateur optique à fibre, comprenant :
- une fibre optique monomode centrale (2) en verre fluoré dopé à l'erbium, et
- des première et deuxième fibres optiques monomodes en silice (4a, 6a) qui sont respectivement placées de part et d'autre de cette fibre optique centrale, qui ont le même diamètre de mode optique que celle-ci et qui lui sont optiquement couplées, de sorte que cette fibre optique centrale est capable d'amplifier un signal lumineux (S) qui lui parvient par l'intermédiaire de la première fibre optique, lorsque la fibre optique centrale reçoit un rayonnement de pompage optique (P1, P2) par l'intermédiaire de l'une au moins des première et deuxième fibres optiques,
cet amplificateur étant caractérisé en ce que l'une au moins de ces première et deuxième fibres optiques (4a, 6a) est dopée à l'erbium.

2. Amplificateur selon la revendication 1, caractérisé en ce que la première fibre optique (4a) est dopée à l'erbium.

3. Amplificateur selon la revendication 1, caractérisé en ce que la deuxième fibre optique (6a) est dopée à l'erbium.

4. Amplificateur selon la revendication 1, caractérisé en ce que les première et deuxième fibres optiques (4a, 6a) sont dopées à l'erbium.

5. Amplificateur selon l'une quelconque des revendications 1 à 4, caractérisé en ce que le verre fluoré est un verre de fluorozirconate.

6. Procédé de fabrication de l'amplificateur optique selon la revendication 1, caractérisé en ce qu'on choisit la longueur de la fibre optique centrale (2) et la longueur de chaque fibre optique de silice dopée à l'erbium (4a, 6a) et en ce qu'on couple ensuite optiquement la fibre optique centrale aux première et deuxième fibres optiques, le choix des longueurs de ces fibres permettant d'obtenir une forme déterminée pour la courbe de gain de l'amplificateur.

## Patentansprüche

1. Optischer Verstärker aus Fasern, umfassend:
- eine zentrale Einmodenglasfaser (2) aus fluoriertem Glas, dotiert mit Erbium, und
- erste und zweite Einmodenglasfasern aus Siliziumoxid (4a, 6a), die jeweils beiderseits der zentralen Glasfaser angeordnet sind, die denselben Durchmesser des optischen Modus wie diese haben und die mit dieser optisch gekoppelt sind, so daß diese zentrale Glasfaser in der Lage ist, ein Lichtsignal (S) zu verstärken, welches diese mit Hilfe der ersten Glasfaser erreicht, wenn die zentrale Glasfaser durch zumindest eine der ersten und zweiten Glasfasern eine optische Anregung (P1, P2) erfährt, wobei der optische Verstärker dadurch gekennzeichnet ist, daß zumindest eine der ersten und zweiten Glasfasern (4a, 6a) mit Erbium dotiert ist.

2. Verstärker nach Anspruch 1, dadurch gekennzeichnet, daß die erste Glasfaser (4a) mit Erbium dotiert ist.

3. Verstärker nach Anspruch 1, dadurch gekennzeichnet, daß die zweite Glasfaser (6a) mit Erbium dotiert ist.

4. Verstärker nach Anspruch 1, dadurch gekennzeichnet, daß die ersten und zweiten Glasfasern (4a, 6a) mit Erbium dotiert sind.

5. Verstärker nach einem der Ansprüche 1 bis 4, dadurch gekennzeichnet, daß das fluorierte Glas ein Fluorzirkonatglas ist.

6. Verfahren zur Herstellung eines optischen Verstärkers nach Anspruch 1, dadurch gekennzeichnet, daß die Länge der zentralen Glasfaser (2) und die Länge jeder mit Erbium dotierten Glasfaser (4a, 6a) aus Silizium gewählt wird, und dadurch, daß die zentrale Glasfaser dann mit der ersten und zweiten Glasfaser optisch gekoppelt wird, wobei die Wahl der Länge der Fasern das Erzielen einer bestimmten Form der Verstärkungskurve des Verstärkers ermöglicht.

## Claims

1. Fibre optical amplifier comprising a central, monomode optical fibre (2) of erbium-doped fluoride glass and first and second silica, monomode optical fibres (4a, 6a) respectively placed on either side of said central optical fibre, which have the same optical mode diameter as the latter and which are optically coupled thereto, so that said central optical fibre is able to amplify a light signal (S) reaching it via the first optical fibre, when the central optical fibre receives an optical pumping radiation (P1, P2) by means of at least one of the first and second optical fibres, said amplifier being characterized in that at least one of said first and second optical fibres (4a, 6a) is doped with erbium.

2. Amplifier according to claim 1, characterized in that the first optical fibre (4a) is doped with erbium.

3. Amplifier according to claim 1, characterized in that the second optical fibre (6a) is doped with erbium.

4. Amplifier according to claim 1, characterized in that the first and second optical fibres (4a, 6a) are doped with erbium.

5. Amplifier according to claim 1, characterized in that the fluoride glass is a fluorozirconate glass.

6. Process for the production of the optical amplifier according to claim 1, characterized in that the length of the central optical fibre (2) and the length of each erbium-doped, silica optical fibre (4a, 6a) are chosen and in that then optical coupling takes place between the central optical fibre and the first and second optical fibres, the choice of the lengths of said fibres making it possible to obtain a predetermined shape for the gain curve of the amplifier.
